# EUROPEAN PATENT APPLICATION

(11) **EP 1 643 169 A2**
(43) Date of publication of application: **05.04.2006**
(21) Application number: 05020961.8
(22) Date of filing: 26.09.2005
(51) Int. Cl.: F16H 63/34

(54) **Parking mechanism**

(30) Priority: 01.10.2004 JP 2004289676
(71) Applicant: JATCO Ltd, Fuji-shi, Shizuoka 417-8585 (JP)
(72) Inventor: Sugano, Taku Jatco Ltd., Fuji-shi Shizuoka 417-8585 (JP); Nakata, Hitoshi Jatco Ltd., Fuji-shi Shizuoka 417-8585 (JP)
(74) Representative: Grünecker, Kinkeldey, Stockmair & Schwanhäusser Anwaltssozietät

(57) **Abstract**

A parking mechanism includes a parking gear (801) disposed within a belt type continuously variable transmission and coaxially fixed to a first rotational shaft of a secondary pulley. A parking pawl (802) is rotatable on a plane perpendicular to the first rotational shaft and able to engage the parking gear with a transmission housing to stop rotation of the secondary pulley. A manual shaft (808) is rotatable with an operational force of a driver for a lever. A detent mechanism is provided for changing a rotational movement of the manual shaft to a movement in a direction of the first rotational shaft. The movement in the direction of the first rotational shaft is transmitted to the parking pawl (802) through a rod (810). A cam (806) is disposed at an end section of the rod to change the movement in the first rotational shaft to a rotational movement on the plane perpendicular to the first rotational shaft. The parking gear is integrally formed at an outer peripheral section of a fixed sheave of the secondary pulley. The detent mechanism for operating the parking pawl is disposed to side of the movable sheave of the secondary pulley. At least a part of the rod is located above a belt passed on a primary pulley and the secondary pulley of the belt type continuously variable transmission.

## Description

### BACKGROUND OF THE INVENTION

This invention relates to improvements in a parking mechanism by which a parking gear disposed coaxial with a secondary pulley of a belt type continuously variable transmission is engaged with a transmission housing through a parking pawl.

Hitherto, various parking mechanisms of the above type have been proposed and put into practical use. One of such parking mechanisms is disclosed in a Japanese Patent Laid-open Publication No. 2004-44689. Briefly, in this parking mechanism, a parking gear is disposed to the side of a final reduction section of a secondary pulley shaft of a secondary pulley in a belt type continuously variable transmission.

### SUMMARY OF THE INVENTION

However, in the above conventional technique, the parking gear is disposed to the side of the final reduction section of the secondary pulley shaft, and therefore the secondary pulley shaft unavoidably extends in an axial direction. As a result, a transmission housing is also extended in the axial direction so that there arises a problem that mountability of the transmission to a vehicle is degraded.

In view of the above problems, it is an object of the present invention is to provide a parking mechanism which can effectively overcome drawbacks encountered in a conventional parking mechanism.

Another object of the present invention is to provide an improved parking mechanism by which the length of the secondary pulley shaft can be reduced even though the parking gear is disposed coaxial with the secondary pulley.

An aspect of the present invention resides in a parking mechanism, which comprises a parking gear disposed within a belt type continuously variable transmission and coaxially fixed to a first rotational shaft of a secondary pulley. A parking pawl is rotatable on a plane perpendicular to the first rotational shaft and able to engage the parking gear with a transmission housing to stop rotation of the secondary pulley. A manual shaft is rotatable with an operational force of a driver for a lever. A detent mechanism is provided for changing a rotational movement of the manual shaft to a movement in a direction of the first rotational shaft. The movement in the direction of the first rotational shaft is transmitted to the parking pawl through a rod. A cam is disposed at an end section of the rod to change the movement in the first rotational shaft to a rotational movement on the plane perpendicular to the first rotational shaft. The parking gear is integrally formed at an outer peripheral section of a fixed sheave of the secondary pulley. The detent mechanism for operating the parking pawl is disposed to side of the movable sheave of the secondary pulley. At least a part of the rod is located above a belt passed on a primary pulley and the secondary pulley of the belt type continuously variable transmission.

With the parking mechanism according to the present invention, the length of the secondary pulley shaft can be reduced thereby improving the mountability of the transmission to the vehicle.

The other objects and features of this invention will become understood from the following description with reference to the accompanying drawing.

### BRIEF DESCRIPTION OF THE DRAWINGS

In the drawings, like reference numerals designate like parts and elements throughout all figures in which:
Fig. 1 is a schematic cross-sectional view of a transmission including an embodiment of a parking mechanism according to the present invention;
Fig. 2 is a schematic view of a second housing of the transmission of Fig. 1, as viewed from the side of a first housing of Fig. 1;
Fig. 3 is a schematic view of the second housing as viewed from the side of a third housing of Fig. 1;
Fig. 4 is an explanatory view for explaining the parking mechanism of Fig. 1;
Fig. 5 is a fragmentary view as viewed in the direction of an arrow P in Fig. 4; and
Fig. 6 is a perspective view of the parking mechanism of Fig. 1.

### DETAILED DESCRIPTION OF THE INVENTION

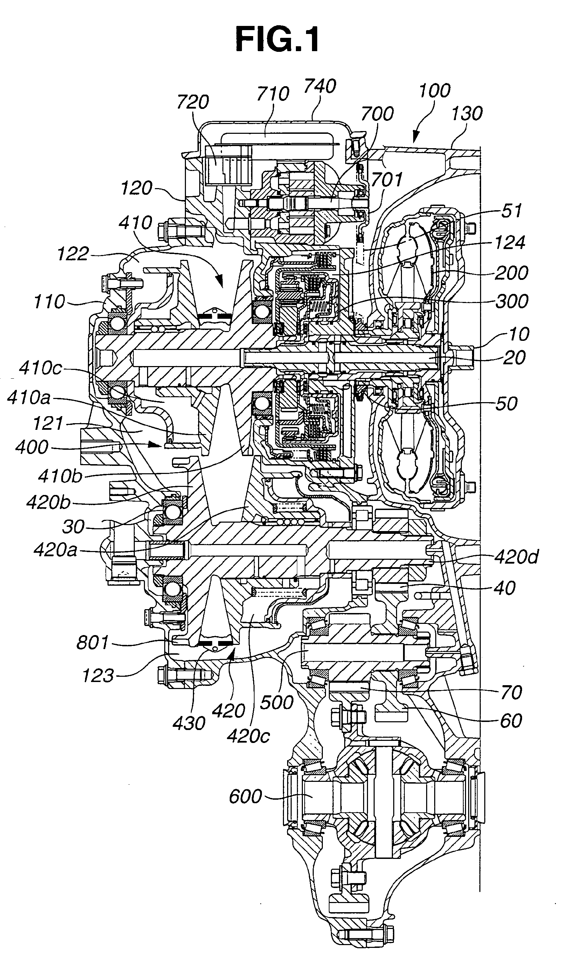

Referring now to Figs. 1 to 6, an embodiment of a parking mechanism according to the present invention is illustrated. Hereinafter, discussion will be made on the embodiment of the parking mechanism with reference to figures, in which the figures are schematic illustrations for clearly presenting the idea of the present invention so as not to illustrate the accurate configuration of the parking mechanism.

Firstly, discussion will be made on the configuration of a transmission including the parking mechanism according to this embodiment.

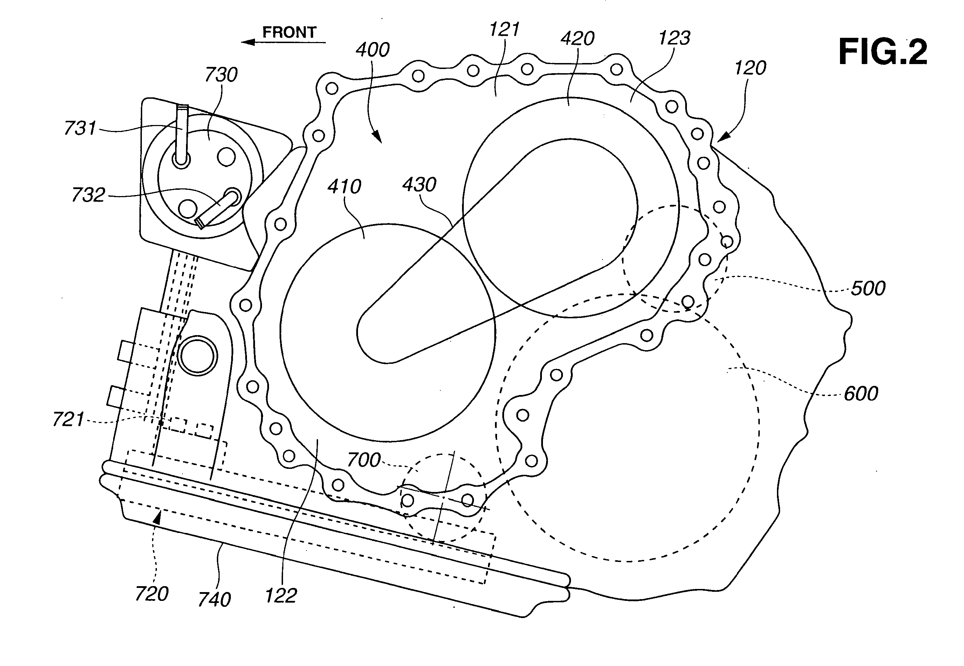

Fig. 1 is a schematic cross-sectional view of a transmission including the parking mechanism of the embodiment according to the present invention. A transmission housing 100 includes a first housing 110, a second housing 120 and a third housing 130. The transmission housing 100 accommodates therein a torque converter 200 for amplifying torque from an engine. A forward-reverse changing mechanism 300 having a start-up clutch is connected to the torque converter 200. The forward-reverse changing mechanism 300 is connected to a belt type continuously variable transmission mechanism 400 for accomplishing a continuous or stepless speed changing between power input and output of the transmission mechanism 400. A driving pinion 500 is provided to connect the belt type continuously variable transmission to a differential gear 600. The transmission housing 100 also accommodates therein a mechanism including a vane pump 700, an oil strainer 710, a control valve unit 720, and an oil cooler 730 in order to supply pressurized oil or lubricating oil to various apparatuses, as shown in Fig. 2.

The torque converter 200 has a pump impeller connected with an engine power output shaft 10, a turbine runner connected with a transmission input shaft 20, a stator for regulating the flow of lubricating oil inside the torque converter 200, and a lock-up clutch for directly transmitting engine power output to the transmission mechanism 400 when the vehicle runs at high speed.

The forward-reverse changing mechanism 300 includes a planetary gear mechanism having a sun gear, a carrier and a ring gear. The sun gear is connected to the side of an engine and has a forward clutch. The carrier is connected to a reverse brake. The ring gear is connected to a primary pulley 410 and has a forward clutch. The planetary gear mechanism may be of the single or double pinion type so as not to be limited to particular types.

The belt type continuously variable transmission mechanism 400 includes a primary pulley 410 (including a movable sheave 410a and a fixed sheave 410b) which rotates as a single member under rotation input from the forward-reverse changing mechanism 300. A secondary pulley 420 (including a movable sheave 420a and a fixed sheave 420b) is provided in order to rotate driving wheels of a vehicle (not shown) at a certain speed reduction ratio or speed ratio. A belt 430 is passed on the groove of each of the pulleys, so that pulleys are connected to each other. The secondary pulley 420 is provided with a secondary pulley shaft 420d. An output gear 40 is fixed on an end section of the secondary pulley shaft 420d and is in engagement with the driving pinion 500. The secondary pulley shaft 420d may be referred to as a first rotational shaft.

The movable sheave 410a of the primary pulley 410 and the movable sheave 420a of the secondary pulley 420 are respectively provided at their rear surfaces with a cylinder chamber 410c and a cylinder chamber 420c. The fixed sheave 420b of the secondary pulley 420 is provided at its outer peripheral side (outside in radial direction) with a parking gear 801 which projects toward the side of the first housing 110. The parking mechanism including the parking gear 801 will be discussed in detail after.

The driving pinion 500 is in engagement with a final gear 70 to which two pinions of the differential gear 600 are fixed. Side gears are in engagement with these two pinions from left and right sides, respectively. Each side gear is connected with a drive shaft so as to drive the left and right driving wheels.

The vane pump 700 includes a rotor, and a cam ring eccentrically disposed to the rotor. The rotor and the cam ring forms an oil chamber which is divided by each vane fitted in a groove of the rotor. Hydraulic oil is supplied to oil passages formed at an axial portion of the rotor and in each groove of the rotor and biases the vanes to the cam ring under the centrifugal force upon rotation of the rotor. By this configuration, it is possible to reduce the number of component parts and to prolong the life of the vane pump 700 as compared with another configuration in which vanes are biased to a cam ring by a spring. The end section of the rotor located at the side of the torque converter 200 is fixedly provided with a driven sprocket 701. The driven sprocket 701 is connected through a chain 51 to a driving sprocket 50 which rotates together with the transmission input shaft 20.

The vane pump 700 has suction and discharge port sides which are respectively provided with the oil strainer 710 and the control valve unit 720. Electronic components 721 such as a plurality of electromagnetic control valve and various sensors (an oil temperature sensor, a fluid pressure sensor, or the like) are disposed on the top surface of the control valve unit 720 as shown in Fig. 2.

The oil cooler 730 is formed therein with a coolant chamber into which coolant or cooling water is supplied, and a lubricating oil chamber into which lubricating oil is supplied. The coolant chamber and the lubricating oil chamber are located adjacent to each other and alternately arranged to form a laminated or layered structure. The coolant chamber of the oil cooler 730 is connected with a coolant supplying passage 731 through which coolant cooled in a radiator is supplied, and with a coolant conveying passage 732 through which coolant within the oil cooler 730 is conveyed to the engine, as shown in Fig. 2. The lubricating oil chamber of the oil cooler 730 is connected with an oil passage through which oil is supplied from the control valve unit 720 and an oil pan 740, and with an oil passage through which cooled oil is supplied as lubricating oil to various apparatuses.

Next, discussion will be made on an arrangement of various devices within the transmission housing.

### Arrangement of Various Devices within Transmission Housing

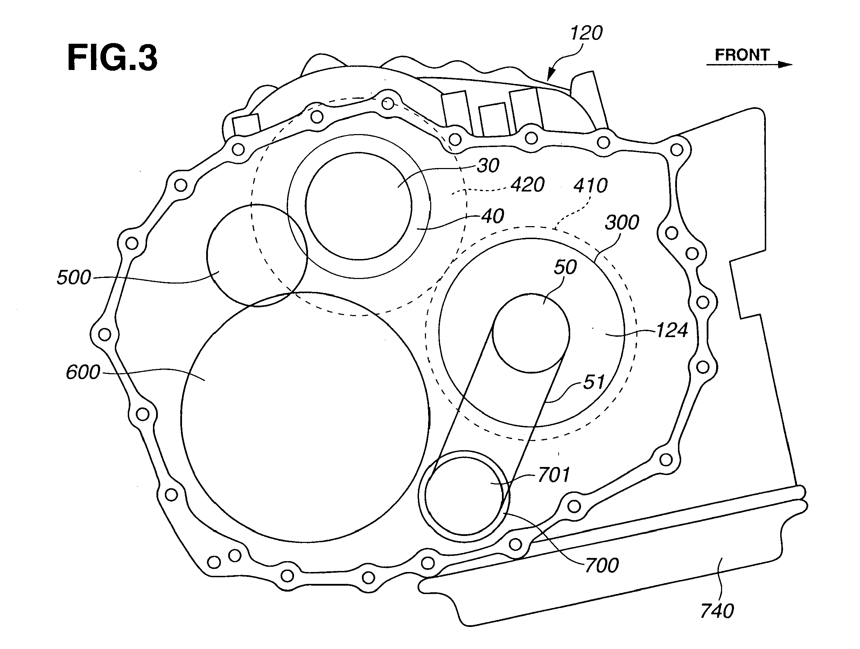

Fig. 2 is the figure of the second housing 120 as viewed from the side of the first housing 110 shown in Fig. 1. Fig. 3 is the figure of the second housing 120 as viewed from the side of the third housing 130 shown in Fig. 1. In Figs 2 and 3, the belt type continuously variable transmission mechanism 400, the driving pinion 500, the differential gear 600, and the vane pump 700 are schematically illustrated as circles indicated by solid line. Additionally, in Figs. 2 and 3, circles indicated by broken line illustrate devices accommodated on an opposite side of a wall with respect to the devices illustrated as the circles indicated by solid line. In Figs. 2 and 3, an arrow with "FRONT" indicates the direction of a front side of the vehicle upon the transmission housing 100 being mounted on the vehicle. Hereinafter, this direction will be simply referred to as "front side", in which an opposite side is referred to as "rear side".

As shown in Fig. 2, the belt type continuously variable transmission mechanism 400 is accommodated within a transmission accommodating chamber 121. The primary pulley 410 of the belt type continuously variable transmission mechanism 400 is accommodated within a primary pulley accommodating chamber 122 located at the front side and lower section of the transmission accommodating chamber 121. The secondary pulley 420 of the belt type continuously variable transmission mechanism 400 is accommodated within a secondary pulley accommodating chamber 123 located at the rear side and upper section of the transmission accommodating chamber 121. The lower section of the transmission accommodating chamber 121 is formed with an opening for draining lubricating oil lubricating various devices into the oil pan 740. Additionally, the secondary pulley accommodating chamber 123 may be referred to as a first accommodating chamber.

The third housing 130 accommodates therein the forward-reverse changing mechanism 300, the driving pinion 500, the differential gear 600, and the vane pump 700 as shown in Fig. 3. The forward-reverse changing mechanism 300 is disposed on the transmission input shaft 20 which is coaxial with the primary pulley 410. The forward-reverse changing mechanism 300 is accommodated within a forward-reverse changing mechanism accommodating chamber 124 which may be referred to as a second accommodating chamber.

In Fig. 3, the differential gear 600 is accommodated at the rear side and lower section of a chamber illustrated. An idler gear 60 fixed on the shaft of the driving pinion 500 is in engagement with the output gear 40 fixed on the secondary pulley shaft 420d. Additionally, the driving pinion 500 is disposed to be in engagement with the final gear 70 fixed with the differential gear 600.

The vane pump 700 is disposed at the side of the oil pan 740 as compared with at the side of the primary pulley 410 and the differential gear 600.

Next, discussion will be made on the parking mechanism.

### Parking Mechanism

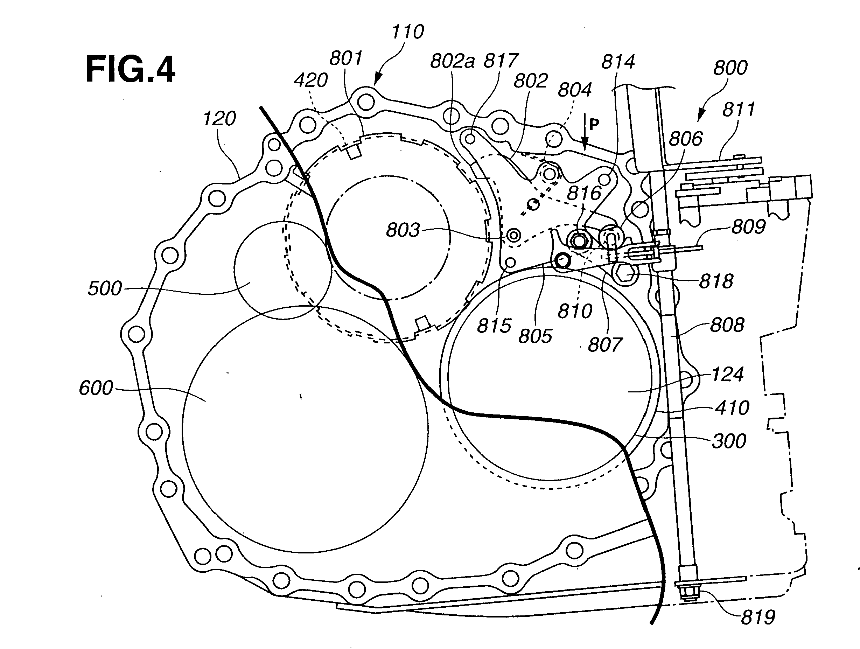

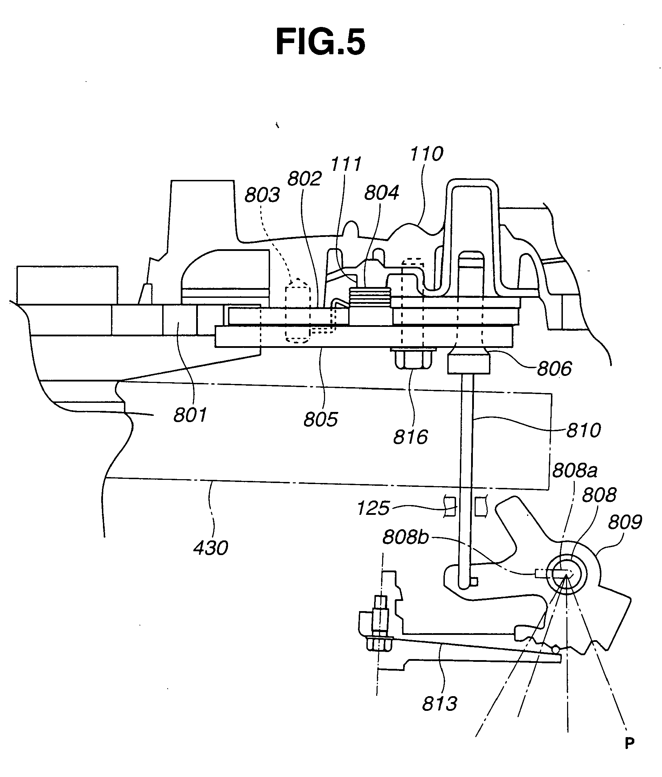

Fig. 4 is the figure illustrating the arrangement of devices within the first housing 110 and the second housing 120, as viewed from the side of the third housing 130. In Fig. 4, left and right sides of a thick curved line respectively illustrate the insides of the first housing 110 and the inside of the second housing 120. Fig. 5 is the figure as viewed from the direction of an arrow P in Fig. 4.

The parking mechanism 800 includes the parking gear 801 formed at the outer peripheral side of the fixed sheave 420b of the secondary pulley 420. The parking gear 801 is engageable with a parking pawl 802 which is moved under the action of a cam 806. Movement of a detent plate 809 disposed to a manual shaft 808 is transmitted to the cam 806 through a rod 810.

The second housing 120 includes a supporting section for supporting the shafts of the devices, in which the supporting section has a wall for separating the side of the first housing 110 from the side of third housing 130. The parking gear 801, the parking pawl 802 and the cam 806 are located at the side of the first housing 110 relative to the wall of the second housing 120 and placed outside the belt 430 of the belt type continuously variable transmission 400. The manual shaft 808 and the detent plate 809 are located at the side of the third housing 130 relative to the wall of the second housing 120 and placed above the forward-reverse changing mechanism accommodating chamber 124 for accommodating the forward-reverse changing mechanism 300. The second housing120 is formed with a through-hole 125. The rod 810 is located above the belt 430 and passes through the through-hole 125 so as to connect the cam 806 and the detent plate 809.

The manual shaft 808 has an upper end which pierces the transmission housing 100 so as to be installed to a manual lever 811 at the outside of the transmission housing 100, so that the manual shaft 808 is rotated with the manual lever 811. The manual shaft 808 also has a lower end which pierces the transmission housing 100 so as to be secured with a bolt 819 at the outside of the transmission housing 100. The manual lever 811 is connected to a select lever (not shown) through a control cable (not shown) so that the manual lever 811 is rotated under the operation of the select lever.

As shown in Fig. 5, the detent plate 809 includes a step portion having a plurality of depressions formed at a part of the outer peripheral section of the detent plate 809. A tip end section of a plate spring 813 is successively brought into engagement with the depressions in accordance with the operative position of the select lever. The step portion and the plate spring 813 are arranged in such a manner to produce a click feeling upon engagement of them when the select lever is operated. For example, when the select lever is operated to be positioned at parking range (P), the tip end section of the plate spring 813 is brought into engagement with the detent plate 809 at a position indicated with the reference character P in Fig. 5. The detent plate 809 and the plate spring 813 constitute a detent mechanism.

The detent plate 809 is fixed to the manual shaft 808 through a closed hole 808a formed in the manual shaft 808 and a pin 808b fitted in the closed hole 808a and fixed to the detent plate 809. The manual shaft 808 is formed with the closed hole in place of a through-hole. This avoids production of burr or the like to be produced when the through-hole is formed, and therefore generation of refuse within transmission can be suppressed. Additionally, in this configuration, the detent plate 809 rotates on a plane parallel with a plane containing the axis of the secondary pulley 420.

The parking pawl 802 is rotatably supported through a pawl shaft 803 and interposed between the inner surface of the first housing 110 and a holding plate 805 in such a state that the parking pawl 802 is rotated on a plane parallel with a radial plane (containing radial directions) of the secondary pulley 420. This parking pawl 802 includes an engagement section 802a which is located at one end section of the parking pawl 802 and brought into mesh with teeth of the parking gear 801. Additionally, another end section of the parking pawl 802 is in contact with the upper surface of the cam 806 under the biasing force of a return spring 804. The pawl shaft 803 is disposed in such a manner that the one end of the pawl shaft 803 is fitted to a closed hole of the first housing 110, while the other end is fitted to a closed hole formed at the holding plate 805, so that the pawl shaft 803 is installed to be prevented from falling off.

The return spring 804 is a coiled spring installed on the outer periphery of a projection 111 formed at the first housing 110. The one end of the return spring 110 is fixed to the inner surface of the first housing 110 upon being press-fitted, while the other end is inserted to a through-hole formed at the parking pawl 802 so as to be in engagement with the parking pawl 802. With this configuration, the parking pawl 802 is biased in a direction to be pushed on the cam 806. The holding plate 805 is located at the inner surface of the first housing 110 through locating pins 814, 815, and fixed to the first housing 110 with bolts 816, 817. The cam 806 is installed to the tip end section of the rod 810 and includes a tip end side and a rear end side whose diameter is larger than that of the tip end side. The rear end section of the rod 810 is connected with the detent plate 809 so that the cam 806 and the rod 810 are moved forward and backward in the axial direction of the rod 810 under the rotation of the detent plate 809.

A guide plate 807 is installed to be located and fixed to the inner surface of the first housing 110 through bolts 817, 818, at the lower surface side of the cam 806, i.e., at the side opposite to the surface to which the parking pawl 802 is in contact. Consequently, the guide plate 807 is arranged to slidably contact with the lower surface of the cam 806.

Here, discussion will be made on the summarized points of the above configuration. A bearing 30 is disposed at the side of the first housing 110 close to the secondary pulley 420, in which a space has been uselessly existed at the radially outside of the bearing 30. In view of this, the parking gear 801 and the parking pawl 802 which rotates on the parallel planes are disposed within the space. With this configuration, it is possible to reduce the size of the secondary pulley shaft 420d in the axial direction.

Additionally the detent plate 809, which rotates on a plane parallel with a plane including an axis of the forward-reverse changing mechanism 300, is disposed above the forward-reverse changing mechanism accommodating chamber 124 which is long in the axial direction. With this configuration, the transmission housing 100 is prevented from being further increased in size.

Furthermore, only the rod 810 is disposed above the belt 430 of the belt type continuously variable transmission mechanism 400. This rod 810 pierces the wall of the second housing 120, so that the belt type continuously variable transmission is in such a configuration as to avoid disposition of members or parts above the belt 430 as far as possible. With this configuration, the refuse is prevented from being produced above the belt 430 and from being entered into the transmission accommodating chamber 121 of the belt type continuously variable transmission 400 as far as possible.

Next, operation of the parking mechanism 800 will be discussed.

### Operation of Hydraulic Circuit

When the engine operates, a driving force is transmitted to the driven sprocket 701 through the driving sprocket 50 (disposed on the transmission input shaft 20) and the chain 51 thereby driving the vane pump 700. When the vane pump 700 is driven, oil stored in the oil pan 740 is supplied to the vane pump 700 after removal of foreign matters by the oil strainer 710. The vane pump 700 generates and applies an oil pressure to oil supplied thereto, so that the oil pressure is supplied to the control valve unit 720. In the control valve unit 720, the oil pressure is regulated so as to be supplied to the various devices.

The oil cooler 730 is supplied with oil which has not been supplied to the various devices from the control valve unit 720 as the hydraulic oil, and with oil stored in the oil pan 740. A filter disposed at the inlet of the oil cooler 730 removes the foreign matters in the supplied oil, and then oil is supplied to the lubricating oil chamber within the oil cooler 730. Oil within the lubricating oil chamber is cooled by the coolant within the coolant chamber which is adjacent to the lubricating oil chamber and separated from the lubricating oil chamber by a wall, and then supplied to the various devices as the lubricating oil.

### Operation of Driving System

The torque converter 200 transmits the driving force transmitted from the engine to the forward-reverse changing mechanism 300 upon increasing torque during a low speed running of the vehicle, while upon engaging the lock-up clutch during a high speed running of the vehicle.

In the forward-reverse changing mechanism 300, the forward clutch engages the sun gear and the ring gear as a single member during forward running of the vehicle, in which an input rotation is output as it is. In contrast, the reverse brake fixes the career to the second housing 120 during rearward running of the vehicle, in which an input rotation is output upon being reversely changed in rotational direction and reduced in speed.

In the belt type continuously variable transmission mechanism 400, the movable sheave of the primary pulley 410 and the secondary pulley 420 is provided at its rear surface with the cylinder chamber. The oil pressure within the cylinder chamber changes the width of the groove of each pulley 410, 420. Consequently, an effective passed-on or winding radius of the belt 430 is changed by controlling a thrust pressing the belt 430 in the direction of the rotational axis of the pulley, thereby accomplishing a continuous or stepless speed change. Driving force whose speed is changed in the belt type continuously variable transmission 400 is transmitted to the driving wheels through the output gear 40, driving pinion 500 and the differential gear 600.

### Operation of Parking Mechanism

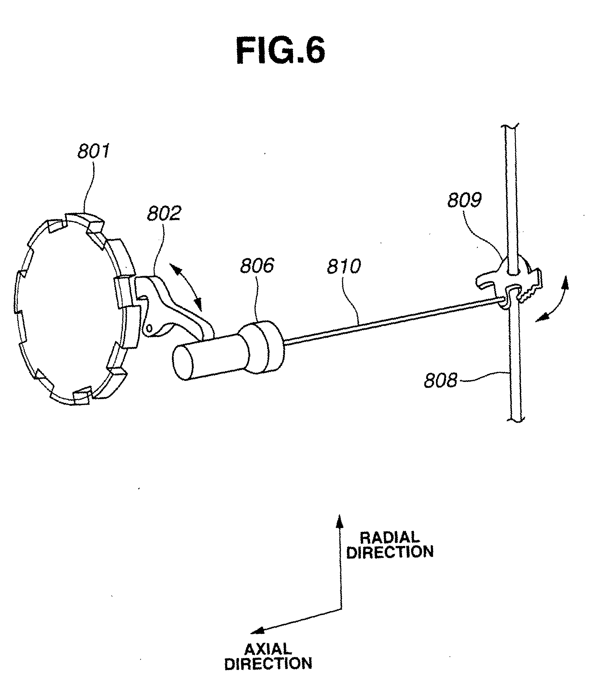

Fig. 6 is the perspective view of the parking mechanism 800 according to the present invention.

In the parking mechanism 800, the detent plate 809 is rotated on the plane parallel with the plane including the axis of the secondary pulley 420 as shown in Fig. 6, under the operation of the select lever. This rotation of the detent plate 809 generates the rotation of the parking pawl 802 through the rod 810 and the cam 806. The rotation of the parking pawl 802 is made on a plane parallel with the radial plane extending in radial direction of the secondary pulley 420.

When the parking mechanism 800 is in the state of non-parking, i.e., the state where the select lever is not operated to the parking position (P), the parking pawl 802 is in contact with a small diameter section of the cam 806 so that the parking pawl 802 is retained at a lock releasing position at which the engagement section 802a of the parking pawl 802 is separated from the teeth of the parking gear 801.

In contrast, when the parking mechanism 800 is in the state of parking, i.e., the state where the select lever is operated to the parking position (P), the detent plate 809 comes into a state where the tip end section of the plate spring 813 is in engagement with the detent plate 809 at the position indicated by the reference character P in Fig. 5. At this time, the rod 810 pushes the cam 806 forward so that a large diameter section of the cam 806 pushes up the parking pawl 802. Therefore, the parking pawl 802 is pushed in the radial direction of the cam 806 against the biasing force of the return spring 804. As a result, the parking pawl 802 is retained at a locking position at which the engagement section 802a of the parking pawl 802 is brought into engagement with the teeth of the parking gear 801.

Next, effects of the parking mechanism according to the present invention will be discussed.
(1) Although the parking gear has been conventionally disposed to the secondary pulley shaft 420d, the parking gear 801 is integrally formed at the outer periphery of the fixed sheave 420b of the secondary pulley 420 in the embodiment, so that the secondary pulley shaft 420d is shortened in the axial direction. As a result, the transmission housing 100 is also shortened in the axial direction, thereby improving mountability of the transmission to the vehicle.
(2) The detent plate 809 is disposed above the forward-reverse changing mechanism accommodating chamber 124 which is wide in the axial direction. As a result, the transmission housing 100 is prevented from being newly expanded so that good mountability of the transmission to the vehicle can be secured.
(3) In order to dispose the detent plate 809 within the secondary pulley accommodating chamber 123, it has been conventionally required to form two through-holes within the secondary pulley accommodating chamber 123 for the purpose of fixing the manual shaft 808. In this embodiment, the detent plate 809 is disposed outside the secondary pulley accommodating chamber 123, so that the movement of the detent plate 809 is transmitted to the cam 806 through the rod 810 piercing the through-hole 125 of the secondary pulley accommodating chamber 123. Consequently, only the rod 810 is disposed above the belt 430 so that the only one through-hole 125 is formed within the secondary pulley accommodating chamber 123. Therefore, it is possible to suppress generation of refuse above the belt 430 and entering of the refuse into the transmission accommodating chamber 121 of the belt type continuously variable transmission mechanism 400.

While the parking mechanism for the transmission, according to the present invention has been explained in accordance with the first embodiment, it will be understood that the concrete configuration of the parking mechanism is not limited to the embodiment described above. Modification and variation of the embodiment described above will occur to those skilled in the art, in light of the above teachings.

For example, in the first embodiment, the transmission housing 100 has been described as being constituted of three members of the first housing 110, the second housing 120 and the third housing 130; however, the transmission housing 100 may be constituted of a number of members more than those of the first embodiment.

The entire contents of Japanese Patent Application No. 2004-289676, filed October 1, 2004 is incorporated by reference.

## Claims

1. A parking mechanism comprising:
a parking gear disposed within a belt type continuously variable transmission and coaxially fixed to a first rotational shaft of a secondary pulley;
a parking pawl which is rotatable on a plane perpendicular to the first rotational shaft and able to engage said parking gear with a transmission housing to stop rotation of the secondary pulley;
a manual shaft which is rotatable with an operational force of a driver for a lever;
a detent mechanism for changing a rotational movement of said manual shaft to a movement in a direction of the first rotational shaft;
a rod through which the movement in the direction of the first rotational shaft is transmitted to said parking pawl; and
a cam disposed at an end section of said rod to change the movement in the first rotational shaft to a rotational movement on the plane perpendicular to the first rotational shaft,
wherein said parking gear is integrally formed at an outer peripheral section of a fixed sheave of the secondary pulley;
wherein said detent mechanism for operating said parking pawl is disposed to side of the movable sheave of the secondary pulley;
wherein at least a part of said rod is located above a belt passed on a primary pulley and the secondary pulley of the belt type continuously variable transmission.

2. A parking mechanism as claimed in Claim 1, wherein the transmission housing includes a section defining a first accommodating chamber for accommodating the secondary pulley, and a section defining a second accommodating chamber for accommodating therein a forward-reverse changing mechanism, the second accommodating chamber overlapping with a part of the first accommodating chamber in a radial direction of the secondary pulley of the first accommodating chamber, wherein said detent mechanism is disposed above the second accommodating chamber upon the transmission being mounted on a vehicle.

3. A parking mechanism as claimed in Claim 1, wherein said detent mechanism is disposed outside the first accommodating chamber, wherein the first accommodating chamber is provided with a section defining a through-hole, wherein said rod pierces the through-hole, said rod extending across the first accommodating chamber to connect said detent mechanism with said cam.
